# EUROPEAN PATENT SPECIFICATION

(11) **EP 3 546 651 B1**
(45) Date of publication and mention of the grant of the patent: **23.03.2022**
(21) Application number: 17874386.0
(22) Date of filing: 29.09.2017
(51) Int. Cl.: E01C 11/22

(54) **ROADWAY BOUNDARY BLOCK AND ROAD STRUCTURE**
FAHRBAHNBEGRENZUNGSBLOCK UND STRASSENSTRUKTUR
BLOC DE DÉLIMITATION DE CHAUSSÉE ET STRUCTURE DE ROUTE

(30) Priority: 28.11.2016 JP 2016230298
(43) Date of publication of application: 02.10.2019
(73) Proprietor: Bridgestone Corporation, Tokyo 104-8340 (JP)
(72) Inventor: YAMAZAKI, Shinichiro, Tokyo 104-8340 (JP)
(74) Representative: Oxley, Robin John George
(86) International application number: PCT/JP2017/035497
(87) International publication number: WO 2018/096788

(56) References cited:
- BE-A- 565 075
- DE-U1- 29 810 628
- DE-U1-202010 005 173
- DE-U1-202010 005 173
- JP-A- 2004 332 331
- JP-A- 2004 332 331
- JP-A- 2011 089 348
- US-B2- 8 834 060

## Description

### [Technical Field]

The present invention relates to a roadway boundary block according to the preamble of claim 1.

### [Background Art]

Conventionally, in order to improve so-called precision docking to the curbstone, which minimizes a distance between a sidewalk and a doorway of a vehicle and minimizes a level difference between the sidewalk and the doorway when the vehicle such as a bus and a tram (streetcar) stops at a stop, a curbstone having a special configuration is provided.

For example, as disclosed in Patent Literature 1, two curved inclined portions are formed in a height direction of a curbstone. With this, an interference with a side wall of a tire is suppressed by a lower inclined portion and contact with a vehicle (body) is avoided by an upper inclined portion.

### [Citation List]

### [Patent Literature]

[PTL 1] U.S. Patent No. 8,562,245. Attention is also drawn to the disclosures of JP2004 332,331, US 8,834,060, BE565,075 and JP2011 089,348.

### [Summary of Invention]

### [Problems to be Solved by the Invention]

Even in a case in which the curbstone described above is used, there is still a room for improving the precision docking. Specifically, even in a case in which the curbstone is used, high driving ability of a driver is required to stop a vehicle to be close to the curbstone.

Further, even in a case in which the driving ability of the driver is high, there are things to be focused on such as movement of passengers when approaching a stop, and therefore concentration of the driver is deteriorated, and the precision docking is impeded.

Accordingly, an object of the present invention is, in consideration of the problem described above, to provide a roadway boundary capable of improving precision docking to a stop easily without depending on high driving ability of a driver.

### [Means for Solving the Problems]

In accordance with the present invention, there is provided a roadway boundary block having the features of claim 1.

Further preferred embodiments are defined by the features of dependent claims 2-10.

### [Brief Description of Drawings]

[Fig. 1] Fig. 1 is a plane view of a road structure including a roadway 10 and a sidewalk 20.
[Fig. 2] Fig. 2 is a cross-sectional view taken along line F2-F2 shown in Fig. 1.
[Fig. 3A] Fig. 3A is a side view of a roadway boundary block 100.
[Fig. 3B] Fig. 3B is a front view of the roadway boundary block 100.
[Fig. 4] Fig. 4 is a view illustrating a state in which a bus 50 stops at a stop 30.
[Fig. 5] Fig. 5 is a view illustrating a state in which lateral force F is generated when a left front tire 51L is located on the roadway boundary block 100.
[Fig. 6] Fig. 6 is a view illustrating a change of a position of the left front tire 51L in accordance with travelling of the bus 50.
[Fig. 7] Fig. 7 is a view illustrating other embodiment of the road structure not covered by the claimed invention.
[Fig. 8A] Fig. 8A is a side view of a roadway boundary block 100A.
[Fig. 8B] Fig. 8B is a side view of a curbstone 150B not covered by the claimed invention.
[Fig. 9] Fig. 9 is a schematic perspective view of a roadway boundary block 100B.
[Fig. 10] Fig. 10 is a side view of a roadway boundary block 100C.
[Fig. 11] Fig. 11 is a schematic perspective view of a roadway boundary block 100D.

### [Description of Embodiments]

Hereinafter, embodiments will be described with reference to the drawings. Further, the same or similar reference numerals are assigned to parts having the same function or the same configuration, and therefore the description thereof is accordingly omitted.

### (1) Schematic configuration of road structure

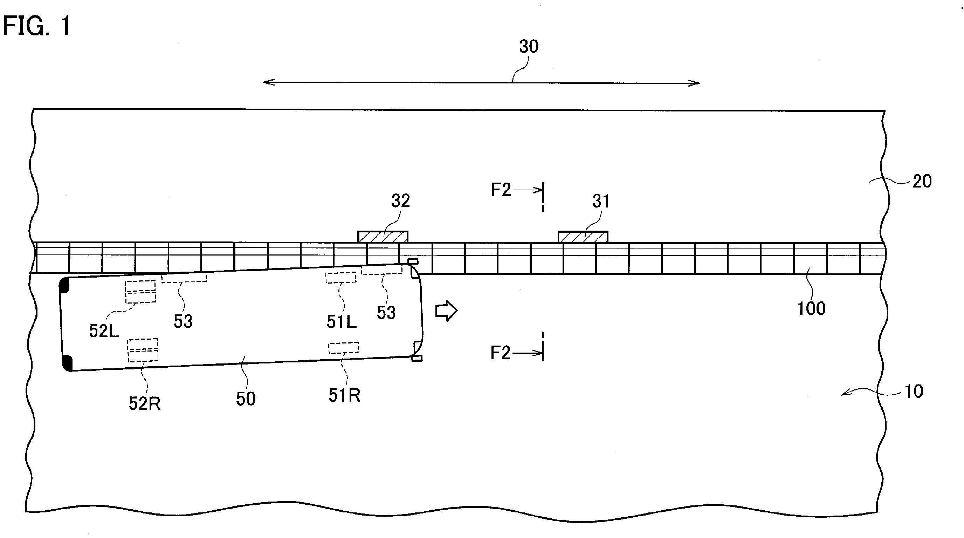

Fig. 1 shows one example of a road structure. Specifically, Fig. 1 is a plane view of the road structure including a roadway 10 and a sidewalk 20.

As shown in Fig. 1, the roadway 10 is a road for vehicles travelling thereon. The sidewalk 20 is a road for pedestrians. The sidewalk 20 is higher in level (15 cm to 30 cm) than the roadway 10. A stop 30 where a passenger gets on/off a bus 50 is arranged on a part of the sidewalk 20.

The bus 50 is one of vehicles travelling on the roadway 10. The bus 50 is provided with a left front tire 51L, a right front tire 51R, a left rear tire 52L and a right rear tire 52R. In the present embodiment, a so-called double tire in which two tires are assembled in parallel is adopted in each of the left rear tire 52L and the right rear tire 52R.

A type of the bus 50 is not especially limited, and therefore examples of the bus 50 include the following types of buses.

In a case of a so-called large-size bus, a length is approximately 10 m to 11 m and a width is approximately 2.5 m, and a front wheel tread is approximately 2.0 m and a rear wheel (double tires) tread is approximately 1.8 m. Further, in a case of the large-size bus, a size of the tires (front tire and rear tire) to be mounted is, for example, 275/70R22.5. A tread (ground contact width) of the tire is approximately 208 mm to 258 mm, which depends on a kind of tire.

In a case of a middle-size bus, a length is approximately 10 m and a width is approximately 2.3 m, and a front wheel tread is approximately 1.9 m and a rear wheel (double tires) tread is approximately 1.7 m. Further, in a case of the middle-size bus, a size of the tires (front tire and rear tire) to be mounted is, for example, 245/70R19.5. A tread (ground contact width) of the tire is approximately 203 mm to 223 mm, which depends on a kind of tire.

In a case of a small-size bus, a length is approximately 6.3 m to 7.0 m and a width is approximately 2.0 m, and a front wheel tread is approximately 1.7 m and a rear wheel (double tires) tread is approximately 1.6 m. Further, in a case of the small-size bus, a size of the tires (front tire and rear tire) to be mounted is, for example, 205/80R17.5. A tread (ground contact width) of the tire is approximately 148 mm to 165 mm, which depends on a kind of tire.

Further, the bus 50 is not limited to such types of buses, and therefore a vehicle used as a bus rapid transit system (BRT: Bus Rapid Transit) or a connected bus in which two or more vehicles are connected may be adopted.

The bus 50 stops at the stop 30. A getting on/off spot 31 and a getting on/off spot 32 corresponding to doorways 53 of the bus 50 are set in the stop 30. The bus 50 travels in a direction of an arrow shown in Fig. 1 and stops at a position where the doorways 53 face the getting on/off spot 31 and the getting on/off spot 32. A passenger gets on or off through two doorways 53 at a front side and a rear side.

It is preferable to minimize a distance between the doorway 53 and the stop 30, specifically a distance to the getting on/off spot 31 (and the getting on/off spot 32) and to minimize a level difference between the doorway 53 and the getting on/off spot 31 (and the getting on/off spot 32) when the bus 50 stops at the stop 30, from a viewpoint of getting on/off performance. In particular, for a passenger using a wheel chair, a buggy or a cart, it is desired to improve a so-called precision docking by minimizing the distance and the level difference.

In order to improve the precision docking of the bus 50, in the present embodiment, a roadway boundary block 100 having a special shape is used at a boundary between the roadway 10 and the sidewalk 20. The roadway boundary blocks 100 are arranged along an extension direction of the roadway 10 so as to define the roadway 10 and the sidewalk 20.

### (2) Specific configuration of road structure

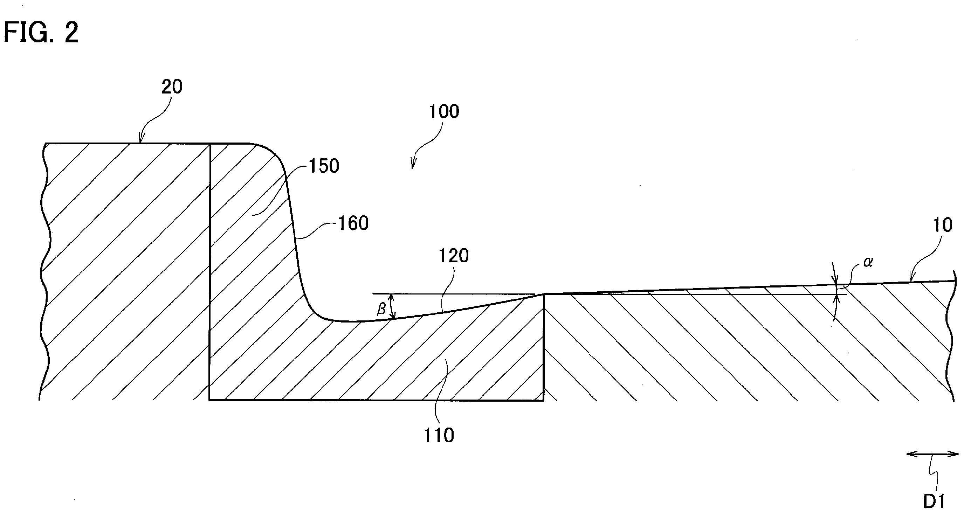

Fig. 2 shows an enlarged view of a part of the road structure shown in Fig. 1. Specifically, Fig. 2 is a cross-sectional view taken along line F2-F2 shown in Fig. 1. That is, Fig. 2 is a cross-sectional view of a part of the roadway 10 and the sidewalk 20 along a road width direction of the roadway 10.

As shown in Fig. 2, the roadway boundary block 100 is provided with a base portion 110 and a curbstone portion 150. The base portion 110 has an upper portion 120. The curbstone portion 150 has a side portion 160.

The upper portion 120 is arranged to be continued to the roadway 10. Specifically, the upper portion 120 is arranged to be continued to the roadway 10 such that a large level difference is not generated with the roadway 10. In this way, since the upper portion 120 is arranged to be continued to the roadway 10, the tires (in particular, the left front tire 51L and the left rear tire 52L in the present embodiment) of the bus 50 roll on the upper portion 120.

An incline of the upper portion 120 against a horizontal direction is larger than an incline of the roadway 10 against the horizontal direction in the road width direction (D1 direction in the figure). Specifically, in the road width direction (D1 direction), an angle β between the upper portion 120 and the horizontal direction is larger than an angle α between the roadway 10 and the horizontal direction (β > α).

A constant incline in the road width direction, namely a transverse gradient, is normally set on the roadway 10 in order to drain rain water. Accordingly, the angle β is preferably set to be slightly larger than such a transverse gradient (α). According to the present invention, the angle β is set in a range between 3 degrees and 9 degrees.

Further, an incline direction of the roadway 10 is opposite to an incline direction of the upper portion 120. That is, in a case in which the roadway 10 is inclined downward to a center side in the width direction of the roadway 10, the transverse gradient α toward the center side in the width direction of the roadway 10 is deemed as a negative value (for example, -2.5 degrees), and accordingly, it is preferable that the angle β is set to a positive value, namely the upper portion 120 is inclined downward to a side of the sidewalk 20, and according to the present invention is set in the range between 3 degrees and 9 degrees as described above.

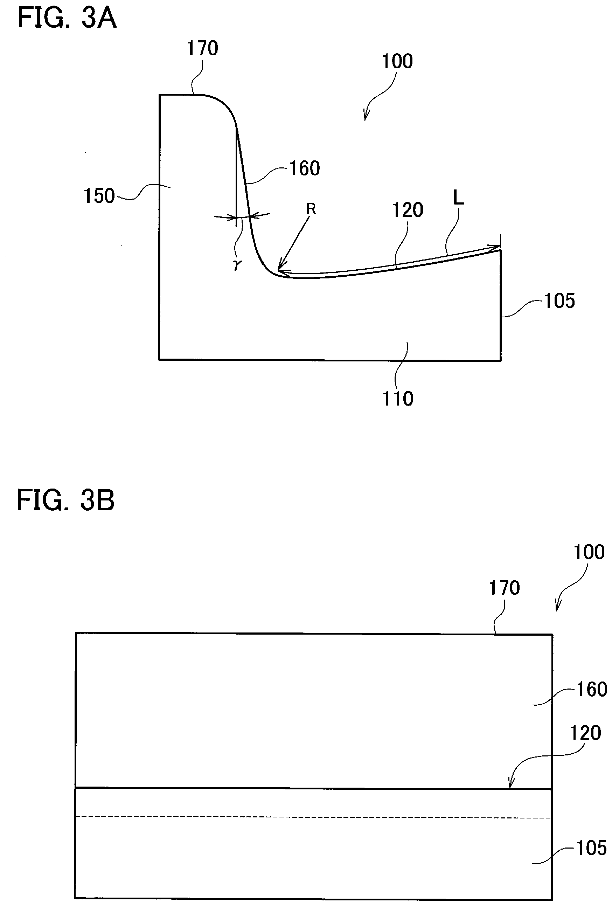

A width (specifically, a width L shown in Fig. 3A) of the upper portion 120 along the road width direction (D1 direction) is larger than a tire ground contact width of the bus 50 (a tread width of the tire) and smaller than the tread of the bus 50. Here, the tread of the bus 50 denotes a so-called tread defined by a distance between a center of the tire ground contact width of the left front tire 51L and a center of the tire ground contact width of the right front tire 51R.

The curbstone portion 150 is raised from one end side of the base portion 110. Specifically, the curbstone portion 150 is raised from a side of the sidewalk 20 of the base portion 110 in the road width direction (D1 direction) to the same level as the sidewalk 20.

The side portion 160 is a side portion of the curbstone portion 150 at a side of the roadway 10. The side portion 160 is inclined without being raised in a vertical direction. Specifically, the side portion 160 is inclined to be far away from the roadway 10 in a direction from a lower end toward an upper end of the curbstone portion 150.

### (3) Shape of roadway boundary block

Next, a shape of the roadway boundary block 100 is further described. Fig. 3A is a side view of the roadway boundary block 100. Fig. 3B is a front view of the roadway boundary block 100.

As described above, the roadway boundary block 100 is provided with the base portion 110 and the curbstone portion 150. As shown in Fig. 3A and Fig. 3B, the base portion 110 has a side surface 105 contacted with the roadway 10. The curbstone portion 150 has a top portion 170 located at the same level as the sidewalk 20.

As described above, the side portion 160 is inclined to be far away from the roadway 10 in the direction from the lower end toward the upper end of the curbstone portion 150. Specifically, the side portion 160 is inclined to be far away from an end portion of the roadway 10 in the road width direction.

An angle γ between the side portion 160 and the vertical direction is preferably set to avoid excessive contact between the tire of the bus 50, in the present embodiment a side wall and a rim wheel of a tire forming the left front tire 51L (and the left rear tire 52L), and a side portion 160, and to relax impact force when the left front tire 51L (and the left rear tire 52L) is contacted with the curbstone portion 150. For example, the angle γ is preferably set in a range between 5 degrees and 30 degrees. Here, the vertical direction is defined based on a state in which the roadway boundary block 100 is arranged between the roadway 10 and the sidewalk 20.

As shown in Fig. 3A, in the present embodiment, the upper portion 120 is curved in a downward concave manner. A communication portion between the upper portion 120 and the side portion 160 is curved with a predetermined curvature. Specifically, the communication portion between the upper portion 120 and the side portion 160 is curved with a curvature radius R. For example, the curvature radius R is preferably set in a range between 75 mm and 150 mm.

The communication portion may not have a single curvature (curvature radius R) but have a plurality of curvatures. Further, the shape of the upper portion 120 may also have a plurality of curvatures. Or alternatively, the upper portion 120 may be formed in a linear shape (namely a flat shape) without being curved.

Considering the tire side (tread width) of the tire to be mounted to the bus 50, the width L of the upper portion 120 is according to the present invention set to more than 300 mm. Here, the width L denotes a distance between the side surface 105 and the boundary position between the upper portion 120 and the side portion 160 along the upper portion 120 (surface).

In a case in which the boundary (communication portion) between the upper portion 120 and the side portion 160 is curved, the boundary position is defined by an apex of the curved portion.

The roadway boundary block 100 is generally formed of concrete similar to a normal curbstone, however considering the contact of the side portion 160 with the left front tire 51L or the like, the roadway boundary block 100 may be formed of rubber or reinforced plastic.

### (4) Functions and effects

Next, functions and effects according to the road structure described above, namely the roadway boundary block 100, are described.

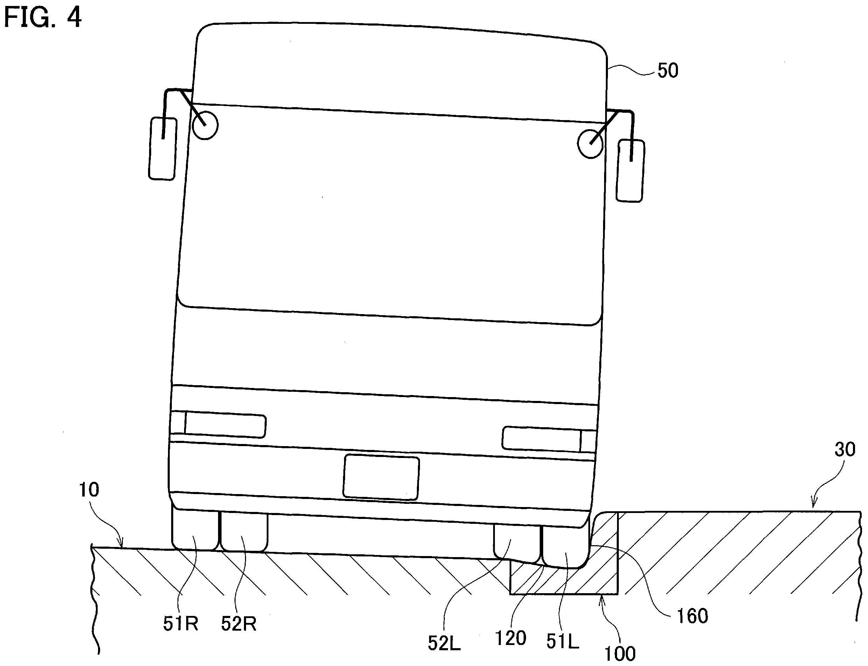

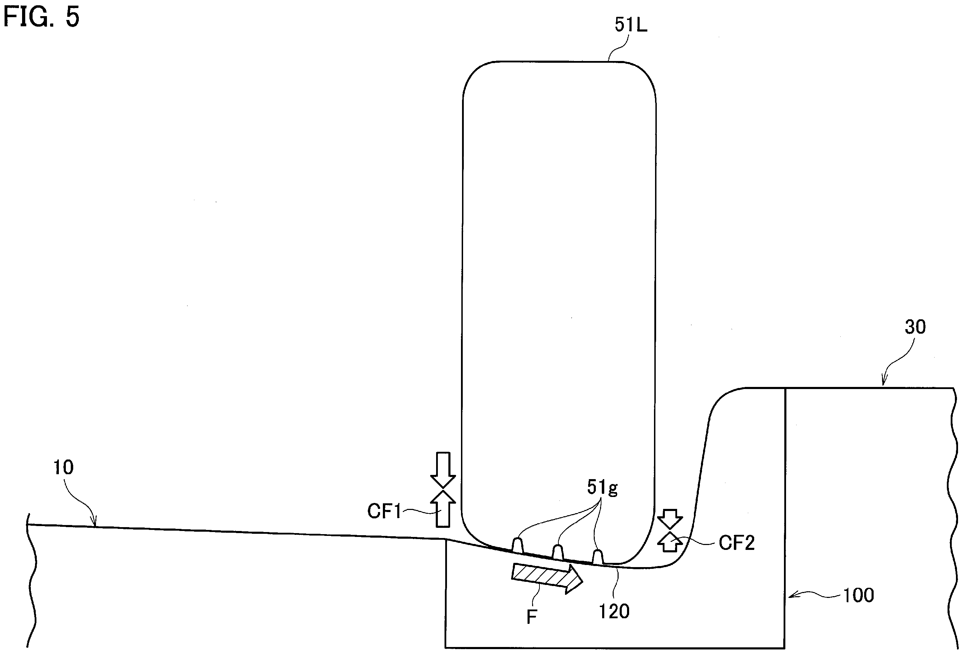

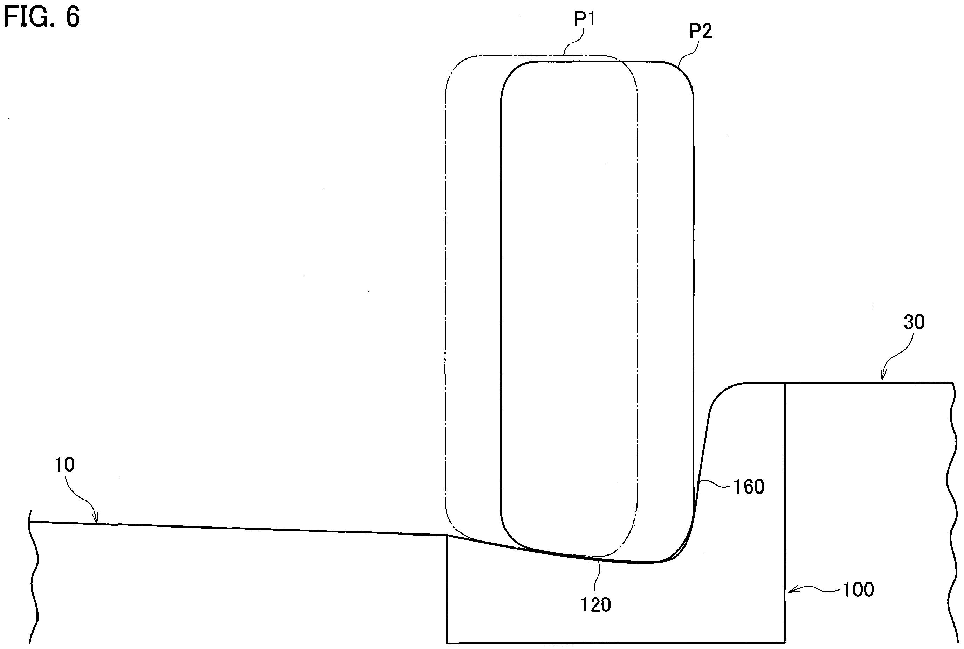

Fig. 4 to Fig. 6 are views (No. 1 to No. 3) for describing the functions according to the roadway boundary block 100. Specifically, Fig. 4 shows a state in which the bus 50 stops at the stop 30. Fig. 5 shows a state in which lateral force F is generated when the left front tire 51L is located on the roadway boundary block 100. Fig. 6 shows a change of a position of the left front tire 51L in accordance with travelling of the bus 50.

As shown in Fig. 4, when the bus 50 stops at the stop 30, the bus 50 approaches the stop 30 such that at least the left front tire 51L is located on the upper portion 120 of the roadway boundary block 100. As a result, in the timing when the bus 50 stops at the stop 30, a side portion of the left front tire 51L, namely a part of the side wall of the tire forming the left front tire 51L, is contacted with the side portion 160 of the roadway boundary block 100.

As described above, the side portion 160 is inclined to be far away from the roadway 10 in the direction from the lower end toward the upper end, and therefore the side portion 160 is not contacted with a body of the bus 50 when a part of the side wall is contacted with the side portion 160 of the roadway boundary block 100.

Further, the left rear tire 52L can be also located on the upper portion 120, however since the left rear tire 52L is formed as a double tire, a part of a tire at an inner side (a side proximal to the center of the vehicle) may not be located on the upper portion 120. On the other hand, the right front tire 51R and the right rear tire 52R are located on the roadway 10.

In the present embodiment, the approach of the bus 50 to the stop 30 is facilitated by using the roadway boundary block 100 having the configuration described above. Specifically, as shown in Fig. 5, when the left front tire 51L is located on the upper portion 120, the lateral force F toward the side portion 160 is generated in the left front tire 51L.

More specifically, the lateral force F toward the side portion 160 and lateral force F' (not shown) toward an opposite side, namely the lateral force F' toward a center side of the roadway 10, are generated in the left front tire 51L on the upper portion 120.

The lateral force F is generated based on a principle as below. Since the upper portion 120 is inclined, compression force (CF1 in the figure) that compresses the rubber of the left front tire 51L (tire) at an inner side of the vehicle with respect to the left front tire 51L is larger than compression force (CF2 in the figure) that compresses the rubber of the right front tire 51L (tire) at an outer side of the vehicle with respect to the left front tire 51L. Generally, a rubber block having a rib shape due to a circumferential direction groove 51g extended in a tire circumferential direction is formed in the left front tire 51L (and other tires), and therefore the rubber block is deformed to be protruded in a tire width direction by the compression forces CF1 and CF2. The restoring force of the deformed rubber block to return to an original shape is based on each of the compression forces CF1 and CF2, and therefore the restoring force at the inner side of the vehicle is larger than the restoring force at the outer side of the vehicle. Thus, the lateral force F toward the side portion 160, namely the lateral force F downward along the upper portion 120, is generated by the restoring forces.

Further, the left front tire 51L is generally provided with a plurality of belt layers (not shown) having high rigidity. The belt layer is formed by tire cords intersected with each other. Thus, when the rubber block, which is deformed between the belt layer and the ground contact surface, returns to the original shape, the lateral force F' (not shown) toward the center side of the roadway 10 is also generated.

However, since a size of a pneumatic radial tire for trucks or buses is larger than that of a pneumatic radial tire for passenger vehicles, the tread contacted with the road surface and the belt layer are separated in a pneumatic radial tire for trucks or buses, and therefore the lateral force F' is small. Accordingly, when the left front tire 51L, which is a pneumatic tire for trucks or buses, is located on the upper portion 120, the lateral force F is generated and the left front tire 51L is pushed toward the side portion 160.

Further, as shown in Fig. 6, when the left front tire 51L is positioned at a position P1, the lateral force F described above is generated, and therefore the left front tire 51L is moved toward a position P2 while rolling. When the left front tire 51L is positioned at the position P2, further movement of the left front tire 51L toward the stop 30 is prevented by the side portion 160.

In this way, according to the present embodiment, the incline of the upper portion 120 against the horizontal direction is larger than the incline of the roadway 10 against the horizontal direction in the road width direction (D1 direction, see Fig. 2). Further, the width L of the upper portion 120 along the road width direction is larger than the tire ground contact width (tread width) of the bus 50 and smaller than the tread (tread) of the bus 50.

Thus, the lateral force F as described above is generated, and therefore by driving the bus 50 in a state in which the left front tire 51L (and the left rear tire 52L) is located on the upper portion 120, the bus 50 can be automatically close to the stop 30. That is, a driver of the bus 50 may only hold a steering wheel with light force for making the bus 50 automatically close to the stop 30 without special operation to the steering wheel. Consequently, the precision docking to the getting on/off spot 31 and the getting on/off spot 32 is improved.

In a case of a conventional curbstone, the control of the bus 50 to suppress impact when making the left front tire 51L or the like contact with the curbstone in order to minimize the distance between the doorways 53 of the bus 50 and the getting on/off spot 31 and the getting on/off spot 32 is extremely difficult and has a high degree of difficulty.

Further, there are things to be focused on such as movement of passengers when approaching a stop, and therefore concentration of the driver might be deteriorated. However, according to the present embodiment, high driving ability is not necessary for improving the precision docking, and therefore the driver can focus on things other than the precision docking.

Further, according to the present embodiment, a cost can be reduced and similar effects can be obtained compared to a method for improving the precision docking by means of automatic driving that recognizes a white line or the like on the roadway 10 because it is only necessary to modify the curbstone, which is a part of the road structure, namely the roadway boundary block in the present embodiment.

As described above, according to the present invention, the width L of the upper portion 120 is set to more than 300 mm. In a case in which the width L is 300 mm or less, considering the size of the tire to be mounted to the bus 50, the whole ground contact width of the left front tire 51L might not be located on the upper portion 120, and therefore the lateral force F might not be generated sufficiently.

On the other hand, it is preferable that the width L of the upper portion 120 is set to less than the tread of the bus 50. Actually, it is enough that the tire mounted to the bus 50 at a side of the sidewalk 20 is sufficiently located on the upper portion 120, and therefore the width L is set to up to a half of the tread of the bus 50. In a case in which the width L of the upper portion 120 is larger than the tread of the bus 50, both of the left front tire 51L and the right front tire 51R are located on the inclined upper portion 120, and thereby the compression force CF1 at the inner side of the vehicle with respect to the left front tire 51L is made small. Such a configuration is not preferable because the lateral force F is not generated sufficiently.

Further, in the present embodiment, the side portion 160 is inclined to be far away from the roadway 10 in the direction from the lower end toward the upper end of the curbstone portion 150. Thus, the excessive contact between the side wall and the rim wheel of the tire forming the left front tire 51L (and the left rear tire 52L), and the side portion 160 can be avoided, and the impact force when the left front tire 51L (and the left rear tire 52L) is contacted with the curbstone portion 150 can be relaxed.

### (5) Other embodiments

As described above, although the content of the present invention was described through the embodiments, the present invention is not limited to those descriptions. It is obvious for a person skilled in the art that various modifications and improvements can be adopted.

(5. 1) First other embodiment not covered by the claimed invention

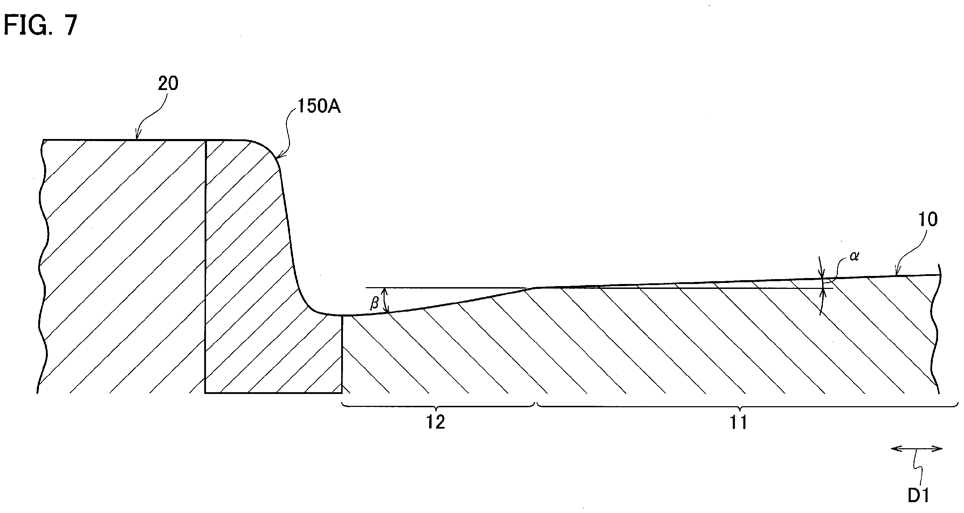

Fig. 7 shows other embodiment of the road structure. Specifically, Fig. 7 corresponds to Fig. 2 and is a cross-sectional view illustrating a part of the roadway 10 and the sidewalk 20 along the road width direction. The road structure shown in Fig. 7 includes the roadway 10 on which a vehicle such as a bus 50 (not shown) travels, and a curbstone 150A arranged at a boundary of the roadway 10 to form a level difference against the roadway 10.

The roadway 10 includes a road portion 11 and a road side portion 12. The road side portion 12 is arranged between the roadway 10, specifically the road portion 11 forming the roadway 10, and the curbstone 150A.

The road side portion 12 corresponds to the base portion 110 of the roadway boundary block 100 described above. The curbstone 150A is formed as a curbstone not having the base portion 110, contrary to the roadway boundary block 100.

An incline of the road side portion 12 against the horizontal direction is larger than an incline of the roadway 10 against the horizontal direction in the road width direction (D1 direction). A width of the road side portion 12 along the road width direction is larger than the tire ground contact width of the bus 50 travelling on the roadway 10 and smaller than the tread of the bus 50.

Specifically, in the road width direction (D1 direction), an angle β between the road side portion 12 and the horizontal direction is larger than an angle α between the road portion 11 and the horizontal direction (β > α).

In this way, similar functions and effects to those of the roadway boundary block 100 described above may be obtained by inclining the road side portion 12 which is a part of the roadway 10.

### (5. 2) Second other embodiment

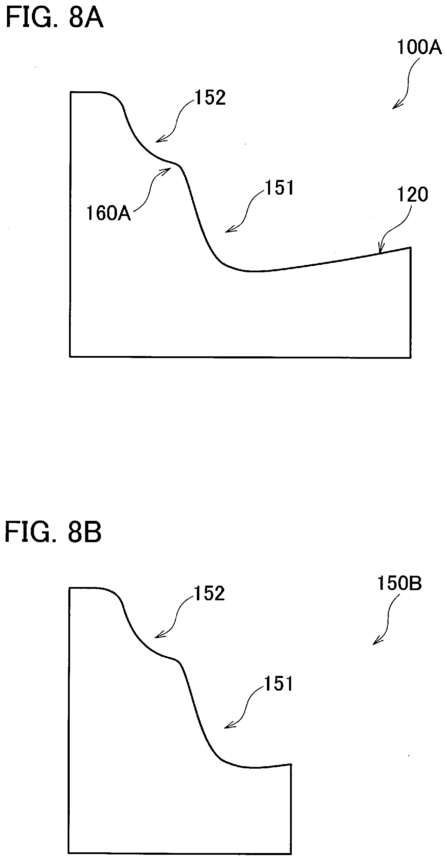

The roadway boundary block 100 (see Fig. 3A and Fig. 3B) and the curbstone 150A (see Fig. 7) described above may be modified in the following manner. Fig. 8A is a side view of a roadway boundary block 100A, and Fig. 8B is a side view of a curbstone 150B.

As shown in Fig. 8A, a side portion 160A of the roadway boundary block 100A is provided with a first region 151 and a second region 152. The first region 151 is located to be close to an upper portion 120. The second region 152 is located above the first region 151.

The second region 152 is inclined more than the first region 151. That is, the second region 152 is further inclined to be far away from the roadway 10 in a direction from a lower end toward an upper end of the second region 152, compared to the first region 151.

In the present embodiment, each of the first region 151 and the second region 152 of the side portion 160A is curved in a concave manner. Here, either one of the first region 151 and the second region 152, in particular the second region 152 not being contacted with a tire directly, may not be curved, and therefore the second region 152 may be formed in a linear shape (flat shape) inclined more than the first region 151.

Further, as shown in Fig. 8B, the curbstone 150B is provided with a first region 151 and a second region 152 having the same shape as the roadway boundary block 100A.

According to the roadway boundary block 100A and the curbstone 150B, since the second region 152 is further formed, contact with the body of the bus 50 can be avoided easily. In particular, an overhang portion of a front can be prevented from being contacted with the roadway boundary block or the curbstone when the bus 50 approaches the stop 30.

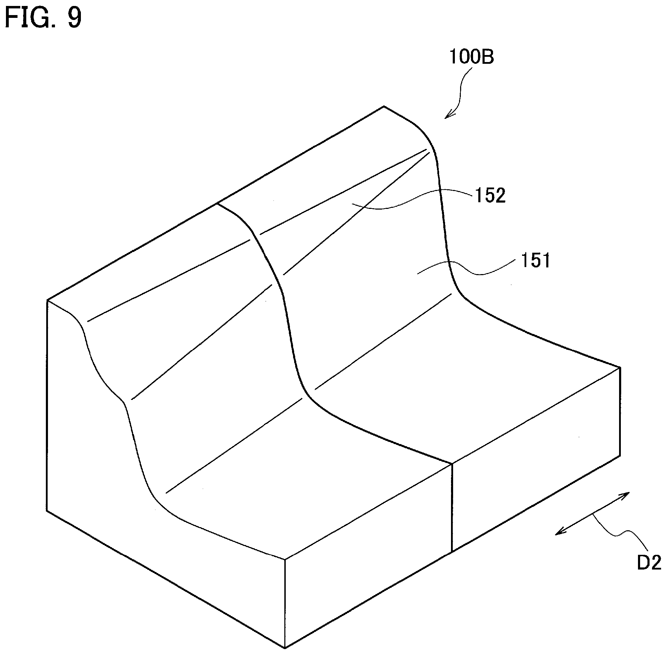

Further, the roadway boundary block 100A may be modified in the following manner. Fig. 9 is a schematic perspective view of a roadway boundary block 100B.

As shown in Fig. 9, a second region 152 of the roadway boundary block 100B is inclined more than a first region 151, similar to the configuration described above, and the second region 152 is reduced in an extension direction (D2 direction) along the roadway 10 (not shown) from one end toward another end of the roadway boundary block 100B.

Here, the roadway boundary block 100B shown in Fig. 9 is formed by two blocks and the second region 152 disappears at a side of another end, however a degree of reduction of the second region 152 may be different in accordance with a shape of the roadway 10, or an approach process of the bus 50 to the stop 30 (the approach while straight travelling or the approach while turning).

For example, in a case of the approach while turning (including a case in which the bus 50 is shifted to be close to the stop 30 from a center side in the width direction of the roadway 10), an influence of an overhang portion of a front of the bus 50 is generally large, and therefore it is preferable to arrange the second region 152 to be long. Further, it is preferable that the second region 152 disappears at a side before the getting on/off spot 32 shown in Fig. 1 in a travelling direction of the bus 50, from a viewpoint of improving the precision docking. It is because the second region 152 disappears at a position corresponding to the doorway 53 of the bus 50 and thereby a distance (gap) between the curbstone portion 150 and the doorway 53 can be made further small.

Further, a curbstone having a shape similar to the curbstone portion 150 of the roadway boundary block 100B described above may be adopted instead of the curbstone 150B shown in Fig. 8B.

### (5. 3) Third other embodiment

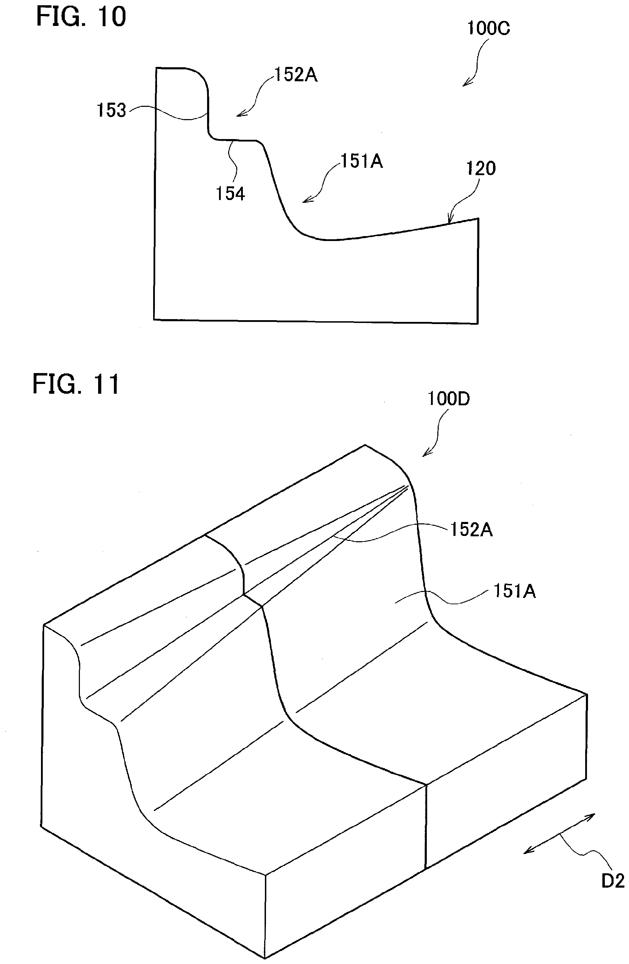

The roadway boundary block 100A (see Fig. 8A) described above may be modified in the following manner. Fig. 10 is a side view of a roadway boundary block 100C.

As shown in Fig. 10, the roadway boundary block 100C is provided with a first region 151A and a second region 152A, similar to the roadway boundary block 100A. The first region 151A has a shape similar to that of the first region 151 of the roadway boundary block 100A. The first region 151A in inclined to be far away from the roadway 10 in a direction from a lower end toward an upper end of the first region 151A.

The second region 152A has a shape different from that of the second region 152 of the roadway boundary block 100A. Specifically, the second region 152A is gouged in a height direction of the roadway boundary block 100C and a road width direction of the roadway 10, namely in a vertical direction and a horizontal direction. Specifically, the second region 152A is formed by a vertical portion 153 extended in the vertical direction and a horizontal portion 154 extended in the horizontal direction.

Further, the roadway boundary block 100C may be modified in the following manner. Fig. 11 is a schematic perspective view of a roadway boundary block 100D.

As shown in Fig. 11, a second region 152A of the roadway boundary block 100D is reduced in an extension direction (D2 direction) along the roadway 10 (not shown) from one end toward another end of the roadway boundary block 100D.

Here, the roadway boundary block 100D shown in Fig. 11 is formed by two blocks and the second region 152A disappears at a side of another end, similar to the roadway boundary block 100B (see Fig. 9), however a degree of reduction of the second region 152A may be different in accordance with a shape of the roadway 10, or an approach process of the bus 50 to the stop 30 (the approach while straight travelling or the approach while turning).

Further, a curbstone having a shape similar to the curbstone portion 150 of any one of the roadway boundary blocks 100C and 100D described above may be adopted instead of the curbstone 150B shown in Fig. 8B. Further, the first region 151A of the roadway boundary block 100C may not be necessarily inclined to be far away from the roadway 10 in the direction from the lower end toward the upper end of the first region 151A.

In the embodiments described above, the roadway 10 is described. The roadway 10 includes not only a road for vehicles but also a vehicle passage in a bus terminal or the like.

As described above, although the embodiments of the present invention were described, the descriptions and drawings that form a part of this disclosure are not to be considered as limitation to the present invention. From this disclosure, a variety of alternate embodiments, examples, and applicable techniques will become apparent to one skilled in the art.

### [Industrial Applicability]

According to the roadway boundary block and the road structure according to the present invention, the precision docking to the stop can be easily improved without depending on high driving ability of a driver.

### [Reference Signs List]

- 10:: roadway
- 11:: road portion
- 12:: road side portion
- 20:: sidewalk
- 30:: stop
- 31:: getting on/off spot
- 32:: getting on/off spot
- 50:: bus
- 51g:: circumferential direction groove
- 51L:: left front tire
- 51R:: right front tire
- 52L:: left rear tire
- 52R:: right rear tire
- 53:: doorway
- 100, 100A to 100D:: roadway boundary block
- 105:: side surface
- 110:: base portion
- 120:: upper portion
- 150:: curbstone portion
- 150A, 150B:: curbstone
- 151, 151A:: first region
- 152, 152A:: second region
- 153:: vertical portion
- 154:: horizontal portion
- 160, 160A:: side portion
- 170:: top portion

## Claims

1. A roadway boundary block (100) comprising:
a base portion (110) having an upper portion (120) arranged to be continued to a roadway (10); and
a curbstone portion (150) raised from one end side of the base portion (110),
wherein:
a width of the upper portion (120) along the road width direction is more than 300mm and smaller than 1.7m, preferably less than 1.6m, the width of the upper portion (120) being the distance between a side surface (105) of the base portion (110) and the boundary position between the upper portion (120) and a side portion (160) of the curbstone portion along the upper portion (120),
**characterised in that** an incline (β) between the upper portion (120) and the horizontal direction is set in a range between 3 degrees and 9 degrees.

2. The roadway boundary block (100) according to claim 1, wherein a side portion (160) of the curbstone portion (150) at a side of the roadway (10) is inclined without being raised in a vertical direction.

3. The roadway boundary block (100A) according to claim 2,
wherein:
the side portion (160A) comprises a first region (151) located to be close to the upper portion (120), and a second region (152) located above the first region (151); and
the second region (152) is inclined more than the first region (151).

4. The roadway boundary block (100A) according to claim 3, wherein either one of the first region (151) and the second region (152) is curved in a concave manner.

5. The roadway boundary block (100C) according to claim 1,
wherein:
a side portion (160) of the curbstone portion (150) at a side of the roadway (10) comprises a first region (151A) located to be close to the upper portion (120), and a second region (152A) located above the first region (151A); and
the second region (152A) is gouged in a vertical direction and a horizontal direction and is formed by a vertical portion (153) extended in the vertical direction and a horizontal portion (154) extended in the horizontal direction.

6. The roadway boundary block (100C) according to claim 5, wherein the first region (151A) is inclined without being raised in a vertical direction.

7. The roadway boundary block (100) according to any one of claims 3 to 6, wherein the second region (152) is reduced in an extension direction along the roadway (10) from one end toward another end of the roadway boundary block.

8. The roadway boundary block (100) according to claim 7, wherein the second region disappears between the one end and the another end of the roadway boundary block.

9. The roadway boundary block (100) according to any one of claims 1 to 8, wherein the upper portion (120) is curved in a downward concave manner.

10. A road structure comprising a roadway in which a vehicle travels and a roadway boundary block according to any one of claims 1 to 9 .

## Patentansprüche

1. Fahrbahnbegrenzungsblock (100), der Folgendes umfasst:
einen Basisabschnitt (110), der einen oberen Abschnitt (120) aufweist, der dafür angeordnet ist, bis zu einer Fahrbahn (10) fortgesetzt zu werden, und
einen Bordsteinabschnitt (150), der von einer Endseite des Basisabschnitts (110) erhöht ist,
wobei:
eine Breite des oberen Abschnitts (120) entlang der Straßenbreitenrichtung größer als 300 mm und kleiner als 1,7 m, vorzugsweise geringer als 1,6 m, ist, wobei die Breite des oberen Abschnitts (120) der Abstand zwischen einer Seitenfläche (105) des Basisabschnitts (110) und der Grenzposition zwischen dem oberen Abschnitt (120) und einem Seitenabschnitt (160) des Bordsteinabschnitts entlang des oberen Abschnitts (120) ist,
**dadurch gekennzeichnet, dass** eine Neigung (β) zwischen dem oberen Abschnitt (120) und der horizontalen Richtung in einem Bereich zwischen 3 Grad und 9 Grad festgesetzt ist.

2. Fahrbahnbegrenzungsblock (100) nach Anspruch 1, wobei ein Seitenabschnitt (160) des Bordsteinabschnitts (150) an einer Seite der Fahrbahn (10) geneigt ist, ohne in einer vertikalen Richtung erhöht zu sein.

3. Fahrbahnbegrenzungsblock (100A) nach Anspruch 2,
wobei:
der Seitenabschnitt (160A) einen ersten Bereich (151), der so angeordnet ist, dass er dem oberen Abschnitt (120) nahe ist, und einen zweiten Bereich (152), der oberhalb des ersten Bereichs (151) angeordnet ist, umfasst und
der zweite Bereich (152) mehr geneigt ist als der erste Bereich (151).

4. Fahrbahnbegrenzungsblock (100A) nach Anspruch 3, wobei einer von dem ersten Bereich (151) und dem zweiten Bereich (152) auf eine konkave Weise gekrümmt ist.

5. Fahrbahnbegrenzungsblock (100C) nach Anspruch 1,
wobei:
ein Seitenabschnitt (160) des Bordsteinabschnitts (150) an einer Seite der Fahrbahn (10) einen ersten Bereich (151A), der so angeordnet ist, dass er dem oberen Abschnitt (120) nahe ist, und einen zweiten Bereich (152A), der oberhalb des ersten Bereichs (151A) angeordnet ist, umfasst, und
der zweite Bereich (152A) in einer vertikalen Richtung und einer horizontalen Richtung ausgemeißelt ist und durch einen vertikalen Abschnitt (153), der sich in der vertikalen Richtung erstreckt, und einen horizontalen Abschnitt (154), der sich in der horizontalen Richtung erstreckt, gebildet wird.

6. Fahrbahnbegrenzungsblock (100C) nach Anspruch 5, wobei der erste Bereich (151A) geneigt ist, ohne in einer vertikalen Richtung erhöht zu sein.

7. Fahrbahnbegrenzungsblock (100) nach einem der Ansprüche 3 bis 6, wobei der zweite Bereich (152) von einem Ende aus zu einem anderen Ende des Fahrbahnbegrenzungsblocks hin in einer Erstreckungsrichtung entlang der Fahrbahn (10) verringert ist.

8. Fahrbahnbegrenzungsblock (100) nach Anspruch 7, wobei der zweite Bereich zwischen dem einen Ende und dem anderen Ende des Fahrbahnbegrenzungsblocks verschwindet.

9. Fahrbahnbegrenzungsblock (100) nach einem der Ansprüche 1 bis 8, wobei der obere Abschnitt (120) auf eine nach unten konkave Weise gekrümmt ist.

10. Straßenaufbau, der eine Fahrbahn, auf der ein Fahrzeug fährt, und einen Fahrbahnbegrenzungsblock nach einem der Ansprüche 1 bis 9 umfasst.

## Revendications

1. Bloc de délimitation de chaussée (100) comprenant :
une portion de base (110) ayant une portion supérieure (120) agencée pour se poursuivre jusqu'à une chaussée (10) ; et
une portion de bordure de trottoir (150) élevée depuis un côté d'extrémité de la portion de base (110),
dans lequel :
une largeur de la portion supérieure (120) le long du sens de la largeur de route est supérieure à 300 mm et inférieure à 1,7 m, préférablement inférieure à 1,6 m, la largeur de la portion supérieure (120) étant la distance entre une surface latérale (105) de la portion de base (110) et la position de délimitation entre la portion supérieure (120) et une portion de latérale (160) de la portion de bordure de trottoir le long de la portion supérieure (120),
**caractérisé en ce qu'**une inclinaison (β) entre la portion supérieure (120) et le sens horizontal est définie dans une plage comprise entre 3 degrés et 9 degrés.

2. Bloc de délimitation de chaussée (100) selon la revendication 1, dans lequel une portion latérale (160) de la portion de bordure de trottoir (150) au niveau d'un côté de la chaussée (10) est inclinée sans être élevée dans un sens vertical.

3. Bloc de délimitation de chaussée (100A) selon la revendication 2,
dans lequel :
la portion latérale (160A) comprend une première région (151) située pour être proche de la portion supérieure (120), et une seconde région (152) située au-dessus de la première région (151) ; et
la seconde région (152) est plus inclinée que la première région (151).

4. Bloc de délimitation de chaussée (100A) selon la revendication 3, dans lequel l'une ou l'autre de la première région (151) et de la seconde région (152) est incurvée de manière concave.

5. Bloc de délimitation de chaussée (100C) selon la revendication 1,
dans lequel :
une portion de côté (160) de la portion de bordure de trottoir (150) au niveau d'un côté de la chaussée (10) comprend une première région (151A) située pour être proche de la portion supérieure (120), et une seconde région (152A) située au-dessus de la première région (151A) ; et
la seconde région (152A) est goujonnée dans un sens vertical et dans un sens horizontal et est formée par une portion verticale (153) étendue dans le sens vertical et une portion horizontale (154) étendue dans le sens horizontal.

6. Bloc de délimitation de chaussée (100C) selon la revendication 5, dans lequel la première région (151A) est inclinée sans être élevée dans un sens vertical.

7. Bloc de délimitation de chaussée (100) selon l'une quelconque des revendications 3 à 6, dans lequel la seconde région (152) est réduite dans un sens d'extension le long de la chaussée (10) d'une extrémité vers une autre extrémité du bloc de délimitation de chaussée.

8. Bloc de délimitation de chaussée (100) selon la revendication 7, dans lequel la seconde région disparaît entre l'une extrémité et l'autre extrémité du bloc de délimitation de chaussée.

9. Bloc de délimitation de chaussée (100) selon l'une quelconque des revendications 1 à 8, dans lequel la portion supérieure (120) est incurvée de manière concave vers le bas.

10. Structure de route comprenant une chaussée sur laquelle un véhicule se déplace et un bloc de délimitation de chaussée selon l'une quelconque des revendications 1 à 9.
